Europäisches Patentamt

(19) European Patent Office

Office européen des brevets

(11) Numéro de publication: **0 091 863**
**B1**

(12) **FASCICULE DE BREVET EUROPÉEN**

(45) Date de publication du fascicule du brevet:
**04.11.87**

(21) Numéro de dépôt: **83400685.0**

(22) Date de dépôt: **31.03.83**

(51) Int. Cl.⁴: **A 01 C 7/04,** B 65 G 47/14

(54) **Dispositif sélecteur pour distributeur de semoir dit "monograine".**

(30) Priorité: **09.04.82 FR 8206233**

(43) Date de publication de la demande:
**19.10.83 Bulletin 83/42**

(45) Mention de la délivrance du brevet:
**04.11.87 Bulletin 87/45**

(84) Etats contractants désignés:
**AT BE CH DE GB IT LI LU NL SE**

(56) Documents cité:
**EP-A-0 037 337**
**CH-A-596 064**
**FR-A-1 410 390**
**FR-A-2 120 821**
**FR-A-2 305 114**
**US-A-3 871 295**

(73) Titulaire: **Société SOGEFINA Société de Gestion Financière Armoricaine (Société Anonyme), 49-51, rue de Ponthieu, F-75008 Paris (FR)**

(72)  Inventeur: **Herriau, Paul, Rue Lucien Sampaix Proville, F-59400 Cambrai (FR)**

(74)  Mandataire: **Lemonnier, André, Cabinet LEMONNIER 4, Boulevard Saint- Denis, F-75010 Paris (FR)**

EP 0 091 863 B1

## Description

La présente invention concerne les distributeurs des semoirs dit "monograine", c'est-à-dire les dispositifs qui, dans ces semoirs, sont disposés entre un magasin à graines en vrac et un dispositif de transport qui conduit les graines dans le sillon creusé dans le sol pour les recevoir, ces dispositifs devant prélever les graines une à une dans le magasin pour les amener a l'état individualise et avec un espacement constant dans le temps au dispositif de transport.

On connait divers types de distributeurs qui peuvent être classés en gros en distributeurs du type mécanique et distributeurs du type à aspiration. Dans les distributeurs mecaniques, la surface du distributeur qui se déplace en continu entre le magasin à graines et le dispositif de transport presente des logements dont le volume correspond sensiblement à celui de la graine, le sélecteur ayant pour but de chasser ou d'éliminer les graines qui sont entraînées par le distributeur sans être engagées dans les logements. Dans les distributeurs à aspiration, la surface du distributeur qui assure le même transport présente des orifices disposés en file et reliés à une source de dépression, le sélecteur chassant ou éliminant les graines qui ne sont pas soumises à la succion d'un orifice.

Les inconvénients des distributeurs du type mécanique sont qu'il faut un modèle de distributeur spécifique par type de graine et même par variété de la même plante, par exemple dans le cas du mais. Les dimensions des logements doivent en effet correspondre très exactement à celles de la graine. Ceci est d'autant plus vrai dans le cas de distributeurs mécaniques de haute précision tels que celui d'écrit dans EP-A-0 037 337 car, s'ils assurent d'une manière quasi parfaite l'absence de manque et de double, sans broyage des graines, les cotes des différents éléments sont étroitement déterminées par les dimensions de la graine.

Les inconvénients des distributeurs du type par aspiration résultent essentiellement du fait que chaque orifice est susceptible de retenir par succion plusieurs graines à la fois et qu'il est extrêmement difficile d'éliminer les graines excédentaires sans provoquer de manques. Par contre un même diamètre des orifices permet de distribuer des graines ayant des volumes qui varient dans d'assez larges limites. On a proposé dans FR-A-1 410 390 une solution à ce problème qui consiste, dans un distributeur du type à aspiration constitué par un plateau circulaire d'axe horizontal dans lequel les orifices d'aspiration débouchent sur une face du plateau selon une série concentrique, de prévoir une fourchette à deux dents dirigée vers le disque pour limiter de part et d'autre de la file de perforation la largeur d'un couloir libre, les dents de la fourchette séparant les graines doubles. Cette disposition ne peut issurer le résultat recherche car si l'écartement des dents de la fourchette est compris diamètre et une fois et demie le diamètre d'une graine, la fourchette éliminera deux graines alignées transversalement selon le plan radial et laissera passer deux graines alignées sur la trajectoire de l'orifice de succion. Dans FR-A-2 135 702 on a proposé une autre solution qui consiste à prévoir deux séries concentriques d'orifices, les orifices des deux séries situés sur un même rayon étant rapprochés, et un bras déflecteur qui balaie la face du plateau au moins au droit de la trajectoire de la série d'orifices la plus excentrée pour déplacer les graines aspirées par les orifices de cette série et les faire passer devant les orifices de la seconde série de manière que, théoriquement, une seule graine soit maintenue par succion par chaque orifice de cette seconde série. Le dispositif est complexe et il est en pratique exclusivement applicable aux distributeurs d'axe horizontal, un distributeur ne pouvant assurer que l'alimentation d'un seul dispositif de transport et donc la mise en terre des graines d'un seul rang alors que les distributeurs d'axe vertical du type concerné par EP-A-0 037 337 peuvent alimenter jusqu'à six et même jusqu'à douze dispositifs de transport et donc un semoir à six ou douze rangs.

La présente invention a pour but de réaliser un dispositif sélecteur pour distributeur pour semoir du type à aspiration qui soit applicable aussi bien aux distributeurs d'axe horizontal que d'axe vertical et qui permet d'associer les avantages des distributeurs à aspiration, notamment le caractère de ne pas être spécifiquement lié à une graine de volume donné, du distributeur, à ceux des distributeurs à axe vertical tels que l'élimination quasi-parfaite des manques et des doubles et la possiblilté d'alimenter plusieurs dipositifs de transport avec un seul distributeur.

Ce but est atteint conformément à l'invention, avec un dispositif sélecteur de graines pour distributeur de semoir dit "monograine" du type comportant un organe transporteur dont une surface se déplace en continu entre un magasin à graines et un dispositif de transport des graines vers le sol avec, dans cette surface, des orifices d'aspiration en communication avec une source de vide pour maintenir par succion les graines sur ladite surface, et un ou des déflecteurs dont la limite de la zone d'action est écartée de la trajectoire de l'axe des orifices d'aspiration, et déplaçant les graines ainsi maintenues par succion, caractérisé en ce qu'il comprend une ou des gorges réalisées sur la surface du distributeur, la ou chacune desdites gorges passant par un seul orifice d'aspiration, l'axe longitudinal de chaque gorge étant perpendiculaire à la trajectoire des orifices d'aspiration, et la section de chaque gorge telle que les graines engagées dans celle-ci s'alignent sensiblement selon ledit axe longitudinal ledit ou lesdits déflecteurs étant disposés de telle façon que la limite de la ou de leur zone d'action est écartée de la trajectoire de l'axe des orifices d'aspiration d'environ le rayon moyen de la section d'une graine pour déplacer par rapport à l'axe de l'orifice d'aspiration toute graine qui n'est pas exactement en coïncidence avec cet orifice d'aspiration.

Lorsque plusieurs graines sont aspirées par un même orifice dans le cas d'un distributeur à aspiration, leur nombre est en général de trois, les graines étant disposées en triangle autour de l'axe de l'orifice. C'est en tout cas, le problème de l'élimination de ces deux graines supplémentaires qui est le plus difficile à résoudre.

Conformément à l'invention et du fait de la gorge entoure l'orifice d'aspiration, les graines s'alignent en s'engageant dans cette gorge et le nombre de graines maintenues par aspiration est au maximum de deux. Si deux graines sont maintenues dans une gorge, elles sont au contact par un point sensiblement au droit de l'orifice et elles "débordent" de l'axe de cet orifice selon l'axe de la gorge d'une distance sensiblement égale au diamètre. Le déflecteur va donc repousser les deux graines dans la gorge pour amener la graine qui se trouve à son contact au droit de l'orifice ou au voisinage de ce point en augmentant l'effet de succion exercé sur cette graine, l'autre graine se trouvant soustraite à l'effet d'aspiration de l'orifice. Dans le cas où une seule graine a été aspirée par un orifice, celle-ci n'est pas contactée par le déflecteur ou si elle est déplacée parce qu'elle est de plus gros diamètre, elle est néanmoins maintenue par l'effet d'aspiration.

Les orifices d'aspiration et les gorges peuvent être réalisés sur la ou les faces du plateau constituant l'organe transporteur ou sur la tranche periphérique du plateau.

La section des gorges peut être quelconque mais leur rayon de courbure au fond est de préférence du même ordre que le rayon des graines à traiter. Le déflecteur peut balayer la surface du distributeur dans laquelle sont réalisés les orifices et les gorges et, dans ce cas, la profondeur de la gorge est de préférence au maximum égale au rayon d'une graine afin que le déflecteur contacte la graine selon un grand cercle. Le déflecteur peut également agir en bout de la gorge, notamment en balayant la surface du transporteur perpendiculaire à celle dans laquelle sont réalisés les oriffce et les gorges et, dans un tel cas, la profondeur de la gorge peut être quelconque, de préférence toutefois sensiblement égale au diamètre de la graine, mais sa longeur en direction du déflecteur à partir de l'axe de l'orifice est alors limitée entre environ le rayon et une fois et demie le rayon moyen de la section des graines à traiter. La valeur de une fois et demie le rayon moyen de la section est telle que la graine déplacée par le déflecteur se trouve, pour son hémisphère opposé à celui où s'effectue le contact, au-dessus de l'orifice d'aspiration alors que l'autre graine se trouve soumise à un effet de succion atténué.

Selon un mode de réalisation préférentiel le sélecteur de distributeur conforme à l'invention est utilisé dans un distributeur du type décrit dans EP-A-0 037 337 et il comporte un plateau distributeur rotatif d'axe de rotation sensiblement vertical avec, à sa périphérie, au moins un et de préférence plusieurs dispositifs de transport des graines répartis angulairement, les graines étant d'abord amenées au centre du plateau distributeur et passant ensuite par un premier moyen formant barrage, pour limiter le nombre des graines ayant accès sur une couronne périphérique du plateau, couronne délimitée par des parois périphériques qui sétendent vers l'intérieur et l'extérieur du plateau, paroi entre lesquelles est réalisé le premier moyen formant barrage avec un passage pour l'élimination des graines en excès couronne dans laquelle sont prévus des logements pour les graines et un second moyen formant barrage et déflecteur pour éliminer de la couronne périphérique les graines ayant passé le premier moyen formant barrage en les repoussant dans le passage susdit à l'exception d'une seule graine par logement, caractérisé en ce que lesdits logements sont constitués par les gorges du sélecteur s'étendant verticalement réalisée dans la tranche verticale périphérique dudit plateau avec l'orifice d'aspiration débouchant au fond de chaque gorge, l'orifice d'aspiration étant relié à la source de vide au moins sur le secteur de la trajectoire des orifices d'aspiration compris entre le premier moyen formant barrage et un point en aval du second moyen formant barrage mais en amont du poste de transport, la ou les parois périphgriques fixes qui délimitent la couronne périphérique pour maintenir les graines dans et au droit des gorges en amont du premier moyen formant barrage étant interrompues sur la partie correspondant au secteur angulaire d'aspiration au moins en amont et au droit du deuxième moyen formant barrage et constituant l'un desdits déflecteurs dont l'arête inférieure est située au-dessus du plateau distributeur à une distance du plan passant par les axes des orifices d'aspiration sensiblement égale à 1 fois à 1,5 fois le rayon moyen de la section des graines.

Selon une autre caractéristique dans la zone d'interruption des parois périphériques et en aval du premier moyen formant barrage, un premier déflecteur est situé en dessous des gorges réalisées par les dents pour éliminer les graines aspirées contre la face inférieure des dents et recentrer sur l'orifice d'aspiration la graine logée dans l'intervalle entre dents, le second moyen formant barrage constituant le deuxième déflecteur situé au-dessus de la face supérieure des dents pour éliminer les graines maintenues par aspiration contre l'extrémité supérieure des gorges.

L'invention et ses caractéristiques seront mieux comprises à la lecture de la description d'un exemple de réalisation préférentiel, descripion faite ci-après avec référence aux dessins ci-annexés dans lesquels:

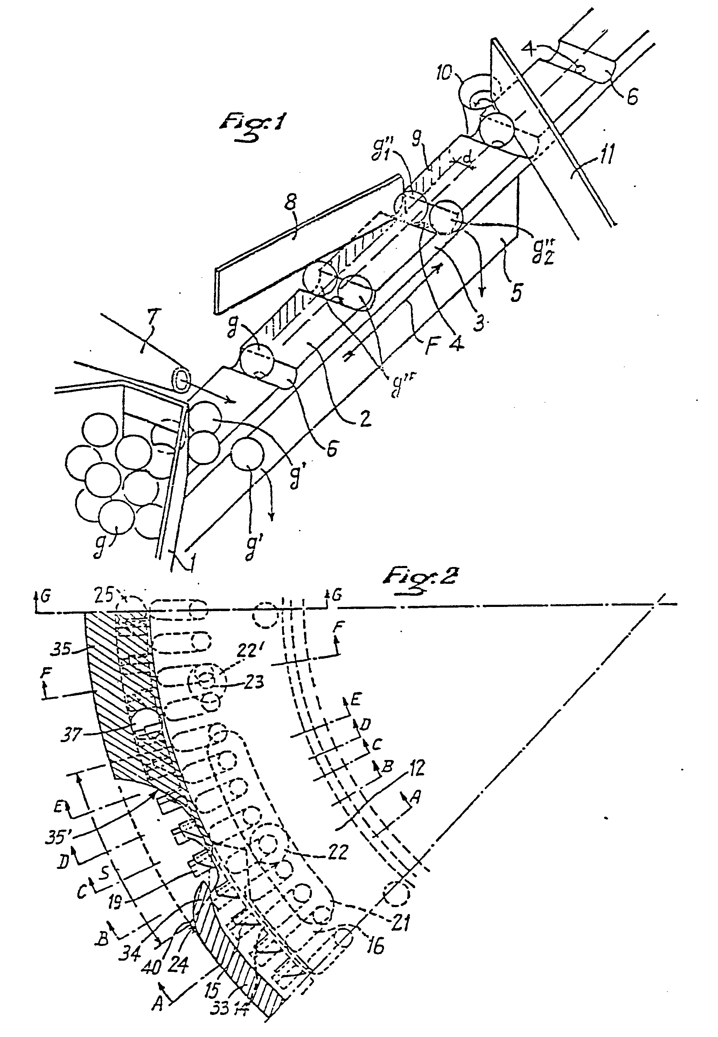

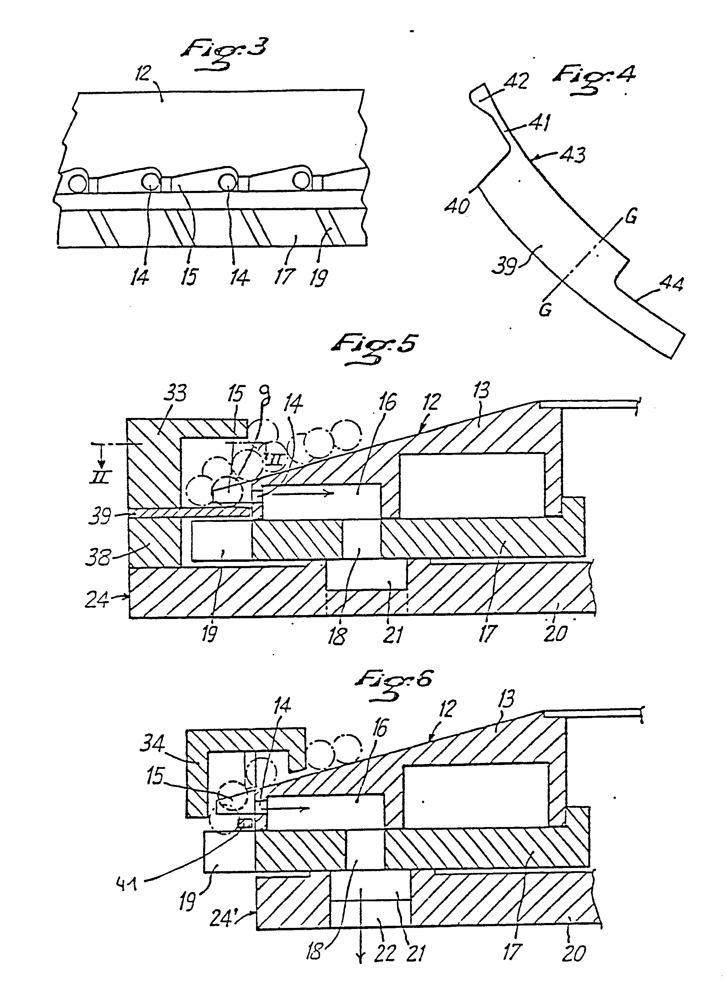

La figure 1 est une vue schématique en perspective destinée à expliquer le principe du fonctionnement du dispositif sélecteur; la figure 2 est une vue en plan et coupe partielle par II-II de figure 5 du secteur correspondant à un poste de distribution d'un distributeur à huit postes; la figure 3 est une vue en élévation développée à plus grande échelle d'une fraction des plateaux à dents et palettes du distributeur; la figure 4 est une vue em plan de la palette formant sélecteur inmférieur; les figures 5 à 11 sont des vues en coupe schématique à plus grande échelle par les plans radiaux A-A, B-B, C-C, D-D, E-E, F-F et G-G respectivement de figure 2.

Schématiquement et comme illustré dans la figure 1 le distributeur comprend un magasin 1 pour les graines 9. Une paroi de ce magasin est formée par la surface 2 d'un transporteur 3 qui est en général un plateau circulaire mais qui, pour plus de simplicité est représenté par une bande se déplaçant dans le sens de la flèche F. Comme habituellememt dans le cas d'un distributeur à aspiration dit pneumatique, des orifices 4 sont réalisés à travers le transporteur et ils circulent en fermant une boîte à vide 5 de manière qu'une aspiration soit réalisée à travers les dits orifices pour aspirer et maintenir les graines g appliquées sur la surface 2 autour du débouché des orifices 4.

Conformément à l'invention, des gorges 6 sont réalisées dans la surface 2 du transporteur 3, transversalement à la flèche F et au droit des orifices 4. Du fait de ces gorges et de l'aspiration, les graines g qui sont engagées dans la gorge sont soumises à l'effet de succion le plus intense et il est possible d'éliminer par la pesanteur, par un balayage léger ou par soufflage avec une tuyère 7, les graines g' qui ont été entraînées sur la surface 2 sans se trouver dans les gorges. Parmi les graines se trouvant dans une gorge 6, seule la graine qui se trouve à l'aplomb d'un orifice 4 ou les deux graines accolées de part et d'autre d'un orifice sont soumises à une succion suffisante pour être retenues. On a donc soit une seule graine g, soit deux graines g'', dans chaque gorge au droit de chaque orifice 4 et le problème est donc d'éliminer une des graines g''. Conformément à l'invention, on combine avec le distributeur un déflecteur 8 dont la zone d'action 9 hachurée se termine à une distance $\underline{d}$ du plan axial des orifices 4 sensiblement égale au rayon d'une graine g. Dans le cas d'un doublet, le déflecteur 8 va repousser la graine $g''_1$ la plus voisine en direction de l'axe de l'orifice 4 et cette graine va être soumise à un effet de succion plus intense en même temps que celui s'exerçant sur la graine $g''_2$ va être réduit. La graine $g''_1$ va finalement venir en coincidence avec l'orifice 4 et la graine $g''_2$ qui n'est plus retenue tombe comme les graines g'. En aval du déflecteur 8 et au droit de l'orifice d'entrée 10 du circuit de transport des graines distribuées, l'aspiration à travers les orifices 4 est supprimée et la graine est déviée vers cet orifice par un déflecteur 11.

Le mode de réalisation de l'invention décrit en détail avec référence aux figures 2 à 11 s'applique à un distributeur. du type décrit dans EP-A-0 037 337, les graines prélevées dans une trémie étant remontées au centre du plateau rotatif conique convexe du distributeur pour être amenées une à une à l'un des circuits de transport, ici au nombre de huit, répartis à la périphérie du plateau, les graines formant des doubles étant éjectées à la périphérie du distributeur et retombant dans la trémie.

Dans les dessins, on a désigné par la reference 12 la surface conique du plateau 13 du distributeur. Les orifices d'aspiration 14 sont répartis à la périphérie du plateau 13 et les gorges conformes à l'invention sont verticales et réalisées par des dents 15 dont la face avant est radiale tandis que la face arrière est inclinée pour faciliter l'accès des graines à l'orifice d'aspiration 14. Chaque orifice d'aspiration 14 est en communication avec une cavité 16 dans la face inférieure du plateau 13.

En-dessous du plateau 13 et entraîné en rotation avec lui, est monté un plateau 17 qui présente un orifice 18 en coincidence avec la cavité 16 et, à la péripbérie, des ailettes 19 avec un espacement identique à celui des dents 15. Comme visible à la figure 3, les ailettes 19 sont inclinées vers l'arrière et vers le bas de manière à solliciter une graine placée dans l'espace entre deux ailettes vers le bas.

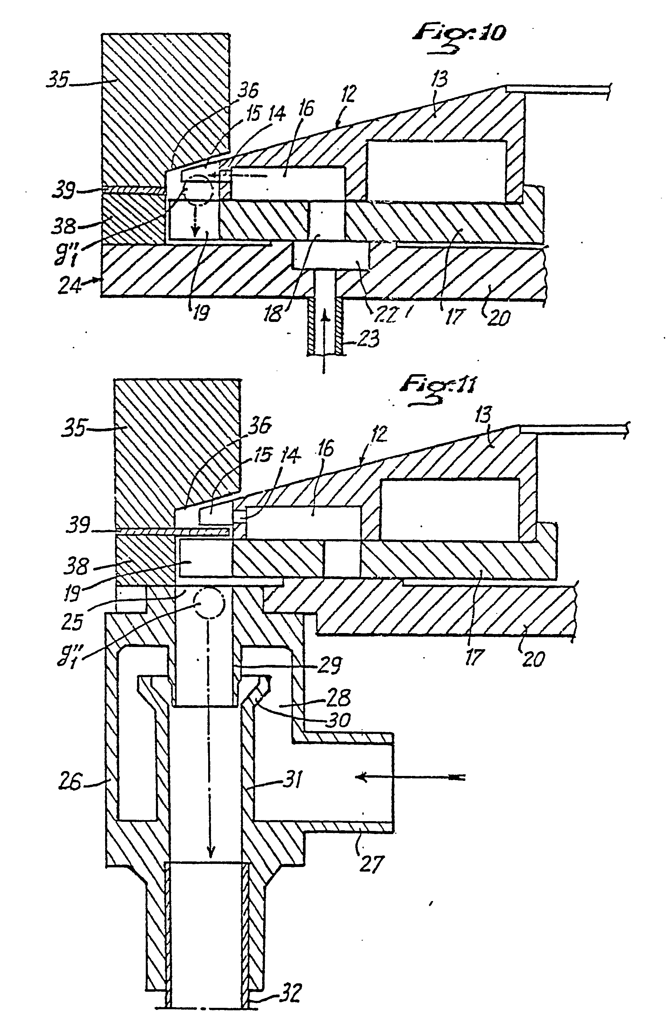

Ces deux plateaux rotatifs sont entraînés en rotation au-dessus d'un plateau fixe 20. Dans ce plateau 20 est réalisée, au droit de la trajectoire des orifices 18, une chambre d'aspiration ou à vide 21 reliée par un raccord 22 à une pompe à vide. Dans chaque poste, la chambre d'aspiration s'étend sur un secteur amont qui englobe tous les stades illustrés de A à E (fig.2) qui comprennent la prise en charge des graines par le distributeur et l'élimination des doubles comme cela sera décrit en détail ci-après. En aval est prévue (figure 10), sur le même cercle, une chambre 22' de soufflage reliée à une canalisation 23. La périphérie 24 de ce plateau est située au-delà de l'extrémité des dents 15 et des ailettes 19 à l'exception d'un secteur S (fig.2) de sélection d'une monograine où son rayon est réduit (figures 6 à 9) pour que sa paroi périphérique 24' se trouve à l'aplomb de la souche des dents et des ailettes. Le plateau 20 porte, d'autre part, le poste de distribution avec un orifice d'entrée 25. L'injecteur 26 (Fig.11) comprend une arrivée d'air sous pression 27, une chambre de répartition 28, un injecteur central 29 qui débouche au col d'un convergent 30 qui se poursuit par un tube central 31 et un tube souple 32 qui aboutit au soc. Cet injecteur est d'un type connu.

La périphérie du plateau du distributeur comporte une paroi fixe 33 en L inversé (figure 5) qui permet l'accès des graines sur la zone périphérique où se trouvent les dents. Cette paroi a un tracé centripète en 34, à l'amorce du secteur S avec des déflecteurs (fig. 6) pour limiter le nombre de graines g entraînées par le distributeur. En aval du secteur S la paroi périphérique 35 s'étend vers l'intérieur jusqu'au cercle correspondant à la racine des dents 15 et elle présente dans son arête inférieure interne un canal 36 pour le libre passage des dents. Un orifice 37 entre l'extrémité de la zone d'aspiration 21 et la chambre de soufflage 22' permet l'établissement d'un équilibre des pressions.

Entre le plateau 20 et les secteurs périphériques 33-35 est prévu un secteur formant cale d'épaisseur 38 qui est surmonté par une lame formant déflecteur 39 dont le tracé est illustré à la figure 4. Le point 40 de la plaquette 39 correspond à l'amorce du secteur 5 et la plaquette 39 présente ensuite vers l'aval une largeur très réduite en 41 pour se terminer par une surface à bord périphérique formant came 42 dont la saillie par rapport au bord circulaire interne 43 est sensiblement égale à la profondeur des dents. Au delà du rayon G-G correspondant au poste de transport, la plaquette 39 présente, dans sa partie la plus centrale, une découpe 44 dont la largeur correspond sensiblement à la longueur des ailettes 19. La plaquette 39 vient s'engager entre le plan inférieur des dents 15 et le plan supérieur des ailettes 19.

Le fonctionnement du distributeur sera expliqué ci-après.

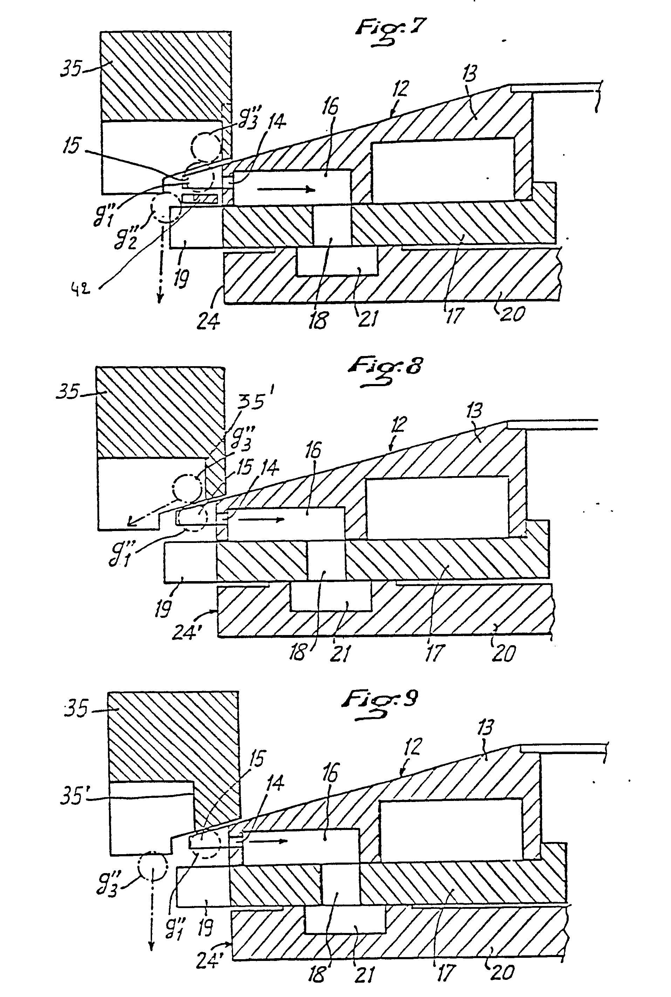

Dans la section qui fait suite au poste de transport et comme illustré dans la figure 5, la plaquette 39 vient en saillie entre les ailettes 19 et les dents 15. Les graines g qui se trouvent sur la surface 12 du plateau 13 pénètrent dans la chambre délimitée par le secteur périphérique 33 et entre les dents 15. Dans le secteur suivant entre les figures 5 et 6, la paroi périphérique 34 se rapproche de l'extrémité des dents pour repousser les graines au-dessus du plateau 13 et la plaquette 39 se réduit à la zone 41 (fig.4) en même temps que la paroi périphérique 34 disparait. Les graines g (Fig.5) qui se trouvent engagées, avec une profondeur d'engagement correspondant à leurs dimensions, entre les dents 15 sont aspirées par l'orifice 14 mais celles plus éloignées retombent dans la trémie (Fig. 7) en étant de plus repoussées, par celles (g"$_2$) qui pourraient être à moitié engagées entre les dents et soumises à une certaine succion, par la partie formant déflecteur 42 de la plaquette 39 (Fig. 4). A partir de ce moment seules restent maintenues par le distributeur la graine (g"$_1$) qui est passée, en étant engagée entre les dents 15, au-dessus de la plaquette 39 et la graine, plus rarement les graines (g"$_3$) qui peuvent être superposées à ladite graine (g"$_1$) comme illustré dans la figure 7. Cette graine g"$_3$ est alors repoussée par la partie amont 35' concave vers l'extérieur de la paroi périphérique 35 (figures 8 et 9). La graine g"$_1$ sélectionnée qui se trouve seule dans un intervalle des dents 15 parvient alors dans la zone (figure 10) qui correspond à la découpe 44 de la plaquette 39. L'aspiration dans l'orifice 14 par la chambre 16 est supprimée, l'orifice 18 n'étant plus au-dessus de la chambre d'aspiration 21. La dépression est supprimée par l'orifice 37 et, au contraire, l'orifice 18 venant en communication avec la chambre de soufflage 22 elle même en communication par un tube 23 avec une source d'air sous pression, la graine g"$_1$ est soufflée pour être dégagée d'entre les dents 15 et elle tombe dans la chambre réalisée entre deux ailettes 19. Lorsque cette chambre parvient au droit de l'orifice 25 du dispositif de transport (figure 11), la graine g"$_1$ est aspirée dans le tube 29 et éjectée par le flux d'air de transport dans le tube 32.

Le mode de réalisation décrit ci-dessus n'est qu'un exemple préférentiel dans le cas d'un distributeur d'axe vertical mais l'invention peut être appliquée à des distributeurs d'axe horizontal, des distributeurs à bande, etc.

**Revendications**

1. Un dispositif sélecteur de graines pour distributeur de semoir dit "monograine" du type comportant un organe transporteur (3, 13) dont une surface (2, 12) se déplace en continu entre un magasin à graines (1) et un dispositif de transport des graines vers le sol (10, 25 à 32) avec, dans cette surface (2, 12), des orifices (4, 14) d'aspiration en communication avec une source de vide (5, 16, 21) pour maintenir par succion les graines sur ladite surface (2, 12), et un ou des déflecteurs (8, 35', 39) dont la limite de la zone d'action est écartée de la trajectoire de l'axe des orifices d'aspiration, et déplaçant les graines ainsi maintenues par succion, caractérisé en ce qu'il comprend une ou des gorges (6, 15) réalisées sur la surface (2, 12) du distributeur, la ou chacune desdites gorges passant par un seul orifice d'aspiration (4, 14), l'axe longitudinal de chaque gorge (6, 15) étant perpendiculaire à la trajectoire des orifices (4, 14) d'aspiration, et la section de chaque gorge (6, 15) telle que les graines engagées dans celle-ci s'alignent sensiblement selon ledit axe longitudinal ledit ou lesdits déflecteurs (8, 35', 39) étant disposés de telle façon que la limite de la ou de leur zone d'action est écartée de la trajectoire de l'axe des orifices (4, 14) d'aspiration d'environ le rayon moyen de la section d'une graine pour déplacer par rapport à l'axe de l'orifice d'aspiration toute graine qui n'est pas exactement en coïncidence avec cet orifice d'aspiration.

2. Un dispositif sélecteur selon la revendication 1, caractérisé en ce que les orifices d'aspiration (4) et les gorges (6) sont réalisés sur la ou les faces du plateau constituant l'organe transporteur.

3. Un dispositif sélecteur selon la revendication 1, caractérisé en ce que les orifices d'aspiration (14) et les gorges (15) sont réalisés sur la tranche périphérique du plateau (13) constituant l'organe transporteur.

4. Un dispositif sélecteur selon l'une quelconque des revendications 1 à 3, caractérisé en ce que deux déflecteurs (35', 42) dont la limite de la zone d'action est écartée de la trajectoire de l'axe des orifices d'aspiration (14) d'environ le rayon moyen de la section d'une graine, sont prévus de part et d'autre des gorges (15) et des orifices d'aspiration (14).

5. Un distributeur avec un sélecteur selon l'une quelconque des revendications 1, 3 et 4 comportant un plateau distributeur rotatif (13) d'axe de rotation sensiblement vertical avec, à sa périphérie, au moins un et de préférence plusieurs dispositifs de transport (25 à 32) des graines répartis angulairement, les graines étant d'abord amenées au centre du plateau distributeur (13) et passant ensuite par un premier moyen (34) formant barrage, pour limiter le nombre des graines ayant accès sur une couronne périphérique du plateau (13), couronne délimitée par des parois périphériques (33, 34, 35) qui s'étendent vers l'intérieur, et l'extérieur du plateau (13), parois entre lesquelles est réalisé le premier moyen (34) formant barrage avec un passage pour l'élimination des graines en excès, couronne dans laquelle sont prévus des logements pour les graines et un second moyen (35') formant barrage et déflecteur pour éliminer de la couronne périphérique les graines ayant passé le premier moyen (34) formant barrage en les repoussant dans le passage susdit à l'exception d'une seule graine par logement, caractérisé en ce que lesdits logements sont constitués par les gorges (15) du sélecteur s'étendant verticalement réalisées dans la tranche verticale périphériqe dudit plateau (13) avec l'orifice d'aspiration (14) débouchant au fond de chaque gorge (15), l'orifice d'aspiration (14) étant relié à la source de vide (16 à 21) au moins sur le secteur de la trajectoire des orifices d'aspiration (14) compris entre le premier moyen (34) formant barrage et un point en aval du second moyen (35') formant barrage mais en amont du poste de transport (25 à 32), la ou lesdites parois périphériques fixes (33-35) qui délimitent la couronne périphérique pour maintenir les graines dans et au droit des gorges (15) en amont du premier moyen (34) formant barrage étant interrompues sur la partie S correspondant au secteur angulaire d'aspiration au moins en amont et au droit du deuxième moyen (35') formant barrage et constituant l'un desdits déflecteurs dont l'arête inférieure est située au-dessus du plateau distributeur (13) à une distance du plan passant par les axes des orifices d'aspiration (14) sensiblement égale à 1 fois à 1,5 fois le rayon moyen de la section des graines.

6. Un distributeur selon la revendication 5, caractérisé en ce que, dans la zone S d'interruption des parois périphériques (33-34-35) et en aval du premier moyen (34) formant barrage, un premier déflecteur (42) est situé en-dessous des gorges réalisées par les dents (15) pour éliminer les graines (g''2) aspirées contre la face inférieure des dents et recentrer sur l'orifice d'aspiration (14), la graine (g'1) logée dans l'intervalle entre dents, le second moyen (35') formant barrage constituant le deuxième déflecteur situé au-dessus de la face supérieure des dents (15) pour éliminer les graines (g''3) maintenues par aspiration contre l'extrémité supérieure des gorges.

**Patentansprüche**

1. Kornvereinzelungsvorrichtung für Kornsämaschinen, genannt "Einzelkorn"-Typ, mit einem Transportorgan (3, 13), dessen eine Oberfläche (2, 12) sich fortlaufend zwischen einem Kornspeicher (1) und einer zum Boden führenden Korntransportvorrichtung (10, 25 bis 32) bewegt und das in dieser Oberfläche (2, 12) mit einer Unterdruckquelle (5, 16, 21) in Verbindung stehende Ansaugöffnungen (4, 14) aufweist, um durch Sog die Körner auf der genannten Oberfläche (2, 12) zu halten, und mit einer oder mehreren Abweiseinrichtungen (8, 35', 39), deren Abweisgrenze von der Bewegungsbahn der Achse der Ansaugöffnungen entfernt ist, um so die durch Sog gehaltenen Körner abzuweisen, dadurch gekennzeichnet, daß auf der Oberfläche (2, 12) eine oder mehrere Ausnehmungen (6, 15) angeordnet sind, wobei die Ausnehmung oder jede der Ausnehmungen eine einzige Ansaugöffnung passiert, wobei die Längsachse jeder Ausnehmung (6, 15) senkrecht zur Bewegungsbahn der Ansaugöffnungen (4, 14) verläuft und der Querschnitt jeder Ausnehmung (6, 15) derart ausgebildet ist, daß die Körner, die von dieser erfaßt sind, sich deutlich in der genannten Längsachse ausrichten, wobei der oder die Abweiseinrichtungen (8, 35', 39) so ausgebildet sind, daß die Grenze ihrer Abweiszone um ungefähr den halben mittleren Radius des Querschnitts eines Korns entfernt ist von der Bewegungsbahn der Achse der Ansaugöffnungen (4, 14), um alles Korn, das nicht genau in Übereinstimmung mit den Achsen der Ansaugöffnung(en) ist, abzuweisen in Bezug zu den Achsen der Ansaugöffnungen (4, 14).

2. Kornvereinzelungsvorrichtung nach Anspruch 1, dadurch gekennzeichnet, daß die Ansaugöffnungen (4) und die Ausnehmungen (6) auf der oder den Flächen einer Drehscheibe, die das Transportorgan bildet, angeordnet sind.

3. Kornvereinzelungsvorrichtung nach Anspruch 1, dadurch gekennzeichnet, daß die Ansaugöffnungen (14) und die Ausnehmungen (15) auf dem Randbereich der Drehscheibe (13), welche das Transportorgan bildet, angeordnet sind.

4. Kornvereinzelungsvorrichtung nach einem der Ansprüche 1 bis 3, dadurch gekennzeichnet, daß zwei Abweiseinrichtungen (35', 42), deren Grenze ihrer Abweiszone von der Bewegungsbahn der Achse der Ansaugöffnungen (14) um ungefähr den halben Radius eines Korns entfernt ist, beiderseits der Ausnehmungen (15) und der Ansaugöffnungen (14) vorgesehen sind.

5. Sämaschine mit einer Kornvereinzelungsvorrichtung nach einem der Ansprüche 1, 3 und 4, mit einer Verteilerdrehscheibe (13), deren Rotationsachse genau vertikal ist und die auf ihrem Rand wenigstens eine und vorzugsweise mehrere winkelmäßig versetzte Transportvorrichtungen (25 bis 32) für Körner aufweist, welche zunächst dem Zentrum der Drehscheibe (13) zugeleitet werden und dann eine erste Absperrvorrichtung (34) passieren, um die Zahl der Körner zu begrenzen, die Zugang zum Umfangskranz der Drehscheibe (13) haben, mit einem Abgrenzungskranz für Umfangswände (33, 34, 35), die sich zum Inneren und Äußeren der Scheibe (13) erstrecken, zwischen denen die erste Absperrvorrichtung (34) angeordnet ist, die einen Durchgang für die Ableitung der überschüssigen Körner aufweist mit Zellen für die Körner in dem Umfangskranz und einer zweiten Vorrichtung (35') zum Absperren und Abweisen der Körner aus dem Umfangskranz, welche die erste Absperrvorrichtung (34) passiert haben, indem sie zurückgestoßen werden in den oben genannten Durchgang mit Ausnahme eines einzigen Korns pro Zelle, dadurch gekennzeichnet, daß die Zellen gebildet werden durch Ausnehmungen (15) der Vereinzelungsvorrichtung, die sich vertikal in dem vertikalen Randbereich der genannten Drehscheibe (13) mit der Ansaugöffnung (14) erstrecken, die auf dem Grund jeder Ausnehmung mündet, daß die Ansaugöffnung (14) verbunden ist mit der Unterdruckquelle (16 bis 21) wenigstens über den Sektor der Bewegungsbahn der Ansaugöffnungen (14), der sich zwischen der ersten Absperrvorrichtung (34) und einem Punkt unterhalb der zweiten Absperrvorrichtung (35'), aber oberhalb der Transportstellung (25 bis 32) erstreckt, daß die genannte(n) feste(n) Umfangswände(e) (33 bis 35), welche den Umfangskranz begrenzen, um die Körner in und rechts von den Ausnehmungen (15) entgegen der Förderrichtung vor der ersten Absperrvorrichtung zu halten, auf dem Teil S entsprechend dem Ansaugsektor wenigstens oberhalb und rechts von der zweiten Absperrvorrichtung (35') unterbrochen sind und wenigstens einen der genannten Abweiser bildet(en), dessen untere Kante über der Drehscheibe (13) in einer Entfernung zur Ebene der Bewegungsbahn der Achsen der Ansaugöffnungen (14) angeordnet ist, welche im wesentlichen gleich dem 1-fachen bis 1,5-fachen des mittleren Radius des Querschnitts der Körner ist.

6. Sämaschine nach Anspruch 5, dadurch gekennzeichnet, daß in der Zone S der Unterbrechung der Umfangswände (33, 34, 35) und unterhalb der ersten Absperrvorrichtung (34) ein erster Abweiser (42) unter den Ausnehmungen angeordnet ist, gebildet durch die Zähne (15), um die Körner zu entfernen (g''2), die gegen die untere Fläche der Zähne angesaugt sind, und sie wieder zu zentrieren auf der Ansaugöffnung (14), wobei sich das Korn (g''a) im Zwischenraum zwischen den Zähnen befindet, und daß die zweite Absperrvorrichtung (35') den zweiten Abweiser bildet, welche über der Oberseite der Zähne (15) angeordnet ist, um die Körner (g''3) zu entfernen, die durch Sog gegen das äußerste obere Ende der Ausnehmungen gezogen werden.

## Claims

1. A seed selector device for a distributor of a so-called "single-seed" seed drill of the type comprising a transportation member (3, 13) having one surface (2, 12) which moves continuously between a seed magazine (1) and a seed transportation member toward the ground (10, 25 to 32) with, in said surface (2, 12), suction orifices (4, 14) in communication with a vacuum source (5, 16, 21) for keeping by suction the seeds on said surface (2, 12), and one or several deflectors (8, 35', 39) the limit of the action range of which is clear of the path of travel of the axis of the suction orifices and deflecting the seeds thus kept by suction, characterized in that it includes one or several grooves (6, 15) formed on the surface (2, 12) of the distributor, said groove or each of said grooves extending through a single suction orifice (4, 14), the longitudinal axis of each groove (6, 15) being perpendicular to the path of travel of the suction orifices (4, 14) and the section of each groove (6, 15) being such that the seeds engaged in the latter align themselves substantially along said longitudinal axis, said one or several deflectors (8, 35', 39) being disposed in such manner that the limit of its or their action range is clear of the path of travel of the axis of the suction orifices (4, 14) by about the average radius of the section of a seed in order to displace, with respect to the axis of the suction orifice, any seed which is not exactly in register with said suction orifice.

2. A selector device according to claim 1, wherein the suction orifices (4) and the grooves (6) are formed on on the face or faces of the plate forming the transportation member.

3. A selector device according to claim 1, wherein the suction orifices (14) and the grooves (15) are formed on the peripheral edge of the plate (13) forming the transportation member.

4. A selector device according to any one of claims 1 to 3, wherein two deflectors (35', 42) the limit of the action range of which is clear of the path of travel of the axis of the suction orifices (14) by about the average radius of the section of a seed, are provided on either side of the grooves (15) and of the suction orifices (14).

5. A distributor with a selector according to any one of claims 1, 3 and 4, comprising a rotary distributor plate (13) of substantially vertical axis with, on its periphery, at least one and preferably several transportation devices (25 to 32) for the seeds angularly distributed, the seeds being first brought to the center of the distributor plate (13) and passing thereafter through a first barrier means (34) for limiting the number of seeds having access onto a periphery crown of the plate (13), said crown being defined by the peripheral walls (33, 34, 35) extending inwardly and outwardly of plate (13), walls between which is provided the first barrier means (34) with a passage for the elimination of the seeds in excess, crown in which are formed recesses for the seeds and a second means (35') forming a barrier and a deflector for eliminating from the periphery crown the seeds having passed throught the first barrier means (34) by pushing them back in the abovementioned passage, with the exception of a single seed per recess, characterized in that said recesses are formed by the grooves (15) of the selector extending vertically, provided in the peripheral vertical edge of said plate (13) with the suction orifice (14) opening in the bottom of each groove (15), the suction orifice (14) being connected to the vacuum source (16 to 21) at least on the sector of the path of travel of the suction orifices (14) comprised between the first barrier means (34) and a point downstream of the second barrier means (35') but upstream of the transportation station (25 to 32), the fixed peripheral wall or walls (33-35) which define the periphery crown for keeping the seeds in and in register with the grooves (15) upstream of the first barrier means (34) being interrupted on the portion (S) corresponding to the suction angular sector at least upstream and opposite the second barrier means (35') and forming one of said deflectors the lower ridge of which is situated above the distributor plate (13) at a distance from the planes passing by the axes of the suction orifices (14) which is substantially equal to 1 time up to 1.5 times the average radius of the section of the seeds.

6. A distributor according to claim 5, characterized in that in the interruption area (S) of the periphery wall (33-34-35) and downstream of the barrier means (34), a first deflector (42) is situated below the grooves provided by the teeth (15) for eliminating the seeds (g"2) sucked against the lower face of the teeth and recentering on the suction orifice (14) the seed (g"1) nested in the interval between the teeth, the second barrier means (35 ) forming the second deflector situated above the upper face of the teeth (15) for eliminating the seeds (g"3) kept by suction against the upper end of the grooves.

Fig.1

Fig.2

*Fig.3*

*Fig.4*

*Fig.5*

*Fig.6*

Fig. 7

Fig. 8

Fig. 9

*Fig. 10*

*Fig. 11*